# EUROPÄISCHE PATENTSCHRIFT

(11) **EP 2 327 508 B1**
(45) Veröffentlichungstag und Bekanntmachung des Hinweises auf die Patenterteilung: **15.08.2012**
(21) Anmeldenummer: 09177534.6
(22) Anmeldetag: 30.11.2009
(51) Int. Cl.: B23Q 3/157, B26D 7/08, B26D 7/26

(54) **Ultraschallbearbeitungseinrichtung sowie Werkzeugmaschinenanordnung**
Ultrasound machining device and tool machine assembly
Dispositif de traitement ultrasons et agencement de machine outils

(43) Veröffentlichungstag der Anmeldung: 01.06.2011
(73) Patentinhaber: GEISS Aktiengesellschaft, 96145 Sesslach (DE)
(72) Erfinder: Geiss, Manfred, 96145 Sesslach (DE)
(74) Vertreter: Isarpatent

(56) Entgegenhaltungen:
- EP-A1- 0 820 841
- EP-A1- 1 589 317
- EP-A1- 1 932 636
- JP-A- 60 172 432

## Beschreibung

Die vorliegende Erfindung bezieht sich auf eine Ultraschallbearbeitungseinrichtung nach dem Oberbegriff des Anspruchs 1 (siehe z.B. EP-1932636) sowie auf eine Werkzeugmaschinenanordnung.

Insbesondere das Schneiden von dünnen und/oder weichen Materialien, beispielsweise von Kunststoffen, mittels einer mit Ultraschall beaufschlagten Sonotrode ist bekannt. Die dazu eingesetzten Sonotroden weisen eine Klinge auf, welche auf Grund des Ultraschalls in ihrer Längsrichtung schwingt. Dies bewirkt, dass die Schnittkräfte gegenüber einer lediglich in der Schnittrichtung bewegten Klinge erheblich reduziert sind, wodurch ein ungewolltes Verschieben oder Verziehen des zu schneidenden Materials vermieden werden kann.

Verschiedene zu schneidende Materialen erfordern oft unterschiedlich ausgebildete Sonotroden. Es ist daher ein zum Teil häufiger Austausch der Sonotroden notwendig. Gemäß einem der Anmelderin intern bekannten Stand der Technik werden die Sonotroden deshalb mittels einer mechanischen Kupplung mit einer entsprechenden Werkzeugmaschine zum Bewegen der Sonotroden lösbar verbunden. Das Lösen und Wiederherstellen der mechanischen Kupplung stellt sich aber vergleichsweise zeitaufwändig dar. Darüber hinaus bauen derartige mechanische Kupplungen vergleichsweise groß.

Es ist daher Aufgabe der vorliegenden Erfindung die vorstehend beschriebenen Nachteile zumindest zu reduzieren. Erfindungsgemäß wird diese Aufgabe durch eine Ultraschallbearbeitungseinrichtung mit den Merkmalen des Patentanspruchs 1 oder durch eine Werkzeugmaschinenanordnung mit den Merkmalen des Patentanspruchs 6 gelöst.

Die der vorliegenden Erfindung zugrunde liegende Idee besteht darin, dass eine magnetische Kupplung, d.h. ein lösbarer magnetischer Kraftschluss, zwischen der Ultraschallbearbeitungseinrichtung und der Werkzeugmaschine vorgesehen wird. Dieser Kraftschluss kann derart gestaltet sein, dass er genügt, um sämtliche wirkenden Bearbeitungskräfte aufzunehmen, insbesondere auch solche, welche bei einem Drehen der Ultraschallbearbeitungseinrichtung um ihre Längsachse mit hoher Geschwindigkeit auftreten.

Eine solche magnetische Kupplung lässt sich vergleichweise schnell und unkompliziert Lösen und Wiederherstellen. Weiterhin baut eine magnetische Kupplung vergleichsweise klein.

In den Unteransprüchen finden sich vorteilhafte Ausgestaltungen und Verbesserungen der Erfindung.

Unter einer "Sonotrode" ist vorliegend ein Werkzeug zu verstehen, welches durch das Einleiten von hochfrequenten mechanischen Schwingungen (Ultraschall) in dieses in Resonanzschwingungen versetzt werden. Die Sonotrode stellt die Verbindung vom Schwingungserzeuger zum Werkstück her und passt die Ultraschallschwingung an die Bearbeitungsaufgabe an.

Unter einer "Werkzeugmaschine" ist vorliegend jede Art von Vorrichtung zu verstehen, welche dazu eingerichtet ist, eine Relativbewegung zwischen der Ultraschallbearbeitungseinrichtung und dem zu bearbeitenden Material vorzusehen.

Gemäß einer bevorzugten Weiterbildung der erfindungsgemäßen Ultraschallbearbeitungseinrichtung ist der Anker als ein Ring aus magnetischem oder magnetisierbarem Material ausgebildet. Dadurch lässt sich einfach eine definierte Ausrichtung der Ultraschallbearbeitungseinrichtung an der Werkzeugmaschine erzielen.

Gemäß einer bevorzugten Weiterbildung der erfindungsgemäßen Ultraschallbearbeitungseinrichtung weist diese ferner einen Schwingungserzeuger auf, welcher mit einer Stromversorgung an der Werkzeugmaschine für eine Aufnahme von elektrischer Energie kontaktierbar ist und mit der Sonotrode für ein Einleiten von mechanischen Schwingungen in diese verbunden ist, wobei der Schwingungserzeuger dazu eingerichtet ist, die elektrische Energie in die mechanischen Schwingungen zu wandeln. Gemäß dieser Weiterbildung sollen der Schwingungserzeuger, die Sonotrode und der Anker eine Einheit bilden, die insgesamt ausgetauscht werden kann, wenn es beispielsweise ein anderes Material zu schneiden gilt und demnach eine andere Sonotrode erforderlich ist. Dies hat den Vorteil, dass die Bestandteile, also der Schwingungserzeuger, die Sonotrode und der Anker, einer jeden Ultraschallbearbeitungseinrichtung im Hinblick auf die Erreichung eines optimalen Resonanzverhaltens aufeinander abgestimmt werden können. Eine derartige Abstimmung kann deshalb notwendig sein, weil beispielsweise eine andere Sonotrode auch einen anderen Schwingungserzeuger erfordert und/oder beispielsweise die Masse der anderen Sonotrode bezüglich der Masse des Ankers anders ist.

Die erfindungsgemäße Ultraschallbearbeitungseinrichtung weist eine Aufnahme auf, an welcher die Sonotrode und der Anker angebracht sind. Dies vereinfacht einerseits die Herstellung der Ultraschallbearbeitungseinrichtung, da die Aufnahme - im Unterschied zur Sonotrode - aus Standardmaterialien hergestellt werden kann. Andererseits kann dadurch eine abgenutzte Sonotrode gegen eine neue Sonotrode kostensparend ausgetauscht werden, während die Aufnahme in der Ultraschallbearbeitungseinrichtung erhalten bleibt. Auf Grund des Umstands, dass die Aufnahme Bestandteil der vorgenannten austauschbaren Einheit sein soll, kann auch diese im Hinblick auf das gewünschte Resonanzverhalten optimal abgestimmt werden.

Es ist auch denkbar, die Sonotrode und die Aufnahme einstückig auszubilden.

Gemäß einer bevorzugten Weiterbildung der erfindungsgemäßen Ultraschallbearbeitungseinrichtung weist die Aufnahme einen sich bezogen auf eine Längsachse der Sonotrode im Wesentlichen radial erstreckenden Flansch auf, an welchem der Anker angebracht ist. Dies erlaubt eine einfache Positionierung der Ultraschallbearbeitungseinrichtung bezüglich einer Spindel der Werkzeugmaschine zum Drehen der Ultraschallbearbeitungseinrichtung um deren Längsachse.

Die Aufnahme der erfindungsgemäßen Ultraschallbearbeitungseinrichtung ist mit einem Durchtritt ausgebildet. Weiter erstreckt sich die Sonotrode wenigstens teilweise durch diesen Durchtritt hindurch. Dadurch lässt sich eine Anordnung erzielen, bei welcher sich die Sonotrode und/oder der Schwingungserzeuger in dem mit der Werkzeugmaschine magnetisch verbundenen Zustand der Ultraschallbearbeitungseinrichtung in die Werkzeugmaschine hineinerstreckt, was Platz spart.

Gemäß einer bevorzugten Weiterbildung der erfindungsgemäßen Ultraschallbearbeitungseinrichtung ist der Schwingungserzeuger außerhalb des Durchtritts angeordnet. Dadurch lässt sich der Schwingungserzeuger in dem mit der Werkzeugmaschine magnetisch verbunden Zustand der Ultraschallbearbeitungseinrichtung einfach mit entsprechenden elektrischen Kontakten verbinden.

Eine bevorzugte Werkzeugmaschine weist eine feststehende Magnetisiereinrichtung und einen drehbaren Rotor auf, wobei der Rotor für ein Kontaktieren des Ankers der Ultraschallbearbeitungseinrichtung vorgesehen ist und die Magnetisiereinrichtung dazu eingerichtet ist, den Rotor und den Anker für ein Verbinden dieser miteinander zu magnetisieren.

Bei einer bevorzugten Werkzeugmaschine weist die Magnetisiereinrichtung eine Spule auf. Allerdings könnte die Magnetisierungseinrichtung auch als Permanentmagnet ausgebildet sein.

Bei einer bevorzugten Werkzeugmaschine ist zwischen der Spule der Magnetisiereinrichtung und dem Rotor ein Labyrinthspalt vorgesehen. Dadurch lässt sich ein stärkeres Magnetfeld in dem Rotor erzeugen.

Bei einer bevorzugten Werkzeugmaschine ist der Rotor mit einer Spindel zum Drehen der Ultraschallbearbeitungseinrichtung um deren Längsachse drehfest verbunden. Dadurch kann beispielsweise eine Sonotrode mit einem kreisförmigen Messer in der Weise bewegt werden, dass sich das Messer mit hoher Geschwindigkeit dreht. Vorzugsweise ist die Längsachse auch die Achse, entlang derer die Ultraschallbearbeitungseinrichtung schwingt.

Bei einer bevorzugten Werkzeugmaschine ist die Spindel mit einer Antriebseinrichtung für ein Antreiben der Spindel verbunden. Bei der Antriebseinrichtung handelt es sich vorzugsweise um einen permanenterregten Drehfeldmotor. Vorzugsweise weist dieser ein hohes Drehmoment auf. Solche Drehfeldmotoren werden auch als Torquemotoren bezeichnet. Dadurch entfällt die Notwendigkeit, zwischen dem Antrieb und der Spindel ein Getriebe vorzusehen.

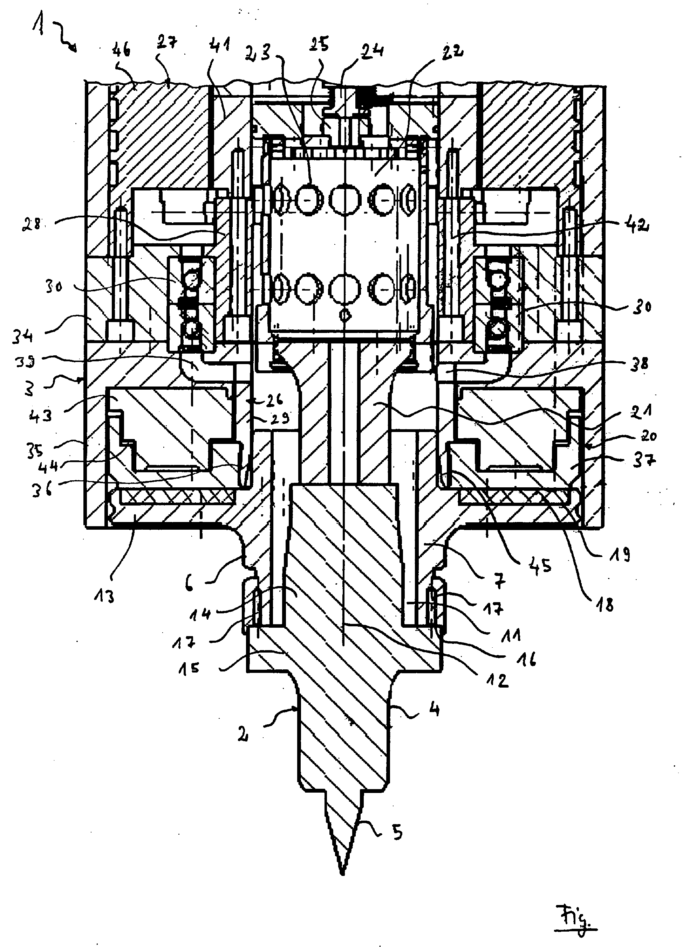

Die Erfindung wird im Folgenden anhand von Ausführungsbeispielen unter Bezugnahme auf die beiliegenden Figur der Zeichnung näher erläutert.

In der Figur bezeichnen dieselben Bezugszeichen gleiche oder funktionsgleiche Komponenten, soweit nichts Gegenteiliges angegeben ist.

Die Figur zeigt einen Schnitt durch eine Teilbereich einer Werkzeugmaschinenanordnung 1 gemäß einem Ausführungsbeispiel der vorliegenden Erfindung.

Die Werkzeugmaschinenanordnung 1 setzt sich aus einer Ultraschallbearbeitungseinrichtung 2 und einer Werkzeugmaschine 3 zusammen, wobei letztere lediglich teilweise dargestellt ist.

Die Ultraschallbearbeitungseinrichtung 2 weist ein Sonotrode 4 auf, welche gemäß dem vorliegenden Ausführungsbeispiel mit einer Klinge 5 zum Schneiden von beispielsweise Kunststoff ausgebildet ist.

Die Ultraschallbearbeitungseinrichtung 2 umfasst ferner eine Aufnahme 6 auf. Die Aufnahme 6 weist einen buchsenförmigen Abschnitt 7 mit einer Durchgangsöffnung 11 auf. An den buchsenförmigen Abschnitt 7 schließt sich ein sich bezogen auf die Längsachse 12 der Sonotrode 4 radial erstreckender Flansch 13 an.

Die Sonotrode 4 erstreckt sich mit einem ersten Abschnitt 14 nach oben in die Durchgangsöffnung 11 hinein und ist an einem sich außerhalb der Durchgangsöffnung 11 nach unten erstreckenden, zweiten Abschnitt 15 an einer unteren Stirnseite 16 des buchsenförmigen Abschnitts 7 der Aufnahme 6 angeflanscht, beispielsweise mittels Schrauben 17. Der zweite Abschnitt 15 der Sonotrode 4 trägt unten die Klinge 5.

An dem Flansch 13 der Aufnahme 6 ist ein Anker 18 fest angebracht. Der Anker 18 ist beispielsweise aus Stahl ausgebildet und weist vorzugsweise eine Ringform auf. Der Anker 18 ist in eine Ausnehmung 19 an der Oberseite des Flansches 13 eingelassen. Der Anker 18 ist dazu vorgesehen, um mit einer an späterer Stelle noch ausführlich beschriebenen Magnetisiereinrichtung 20 der Werkzeugmaschine 3 wechselzuwirken, um ein Lösen der Ultraschallbearbeitungseinrichtung 2 von der Werkzeugmaschine 3 zu ermöglichen bzw. ein kraftschlüssiges Verbinden der Ultraschallbearbeitungseinrichtung 2 mit der Werkzeugmaschine 3 zu gewährleisten. Die Figur zeigt die Ultraschallbearbeitungseinrichtung 2 und die Werkzeugmaschine 3 im kraftschlüssig verbundenen Zustand.

An den ersten Abschnitt 14 der Sonotrode 4 schließt sich nach oben hin ein Kopplungsstück 21 der Ultraschallbearbeitungseinrichtung 2 an. Das Kopplungsstück 21 verbindet einen Schwingungserzeuger 22 der Ultraschallbearbeitungseinrichtung 2 mit der Sonotrode 4.

Der Schwingungserzeuger 22 kann eine Vielzahl von Kühlungsöffnungen 23 aufweisen. Der Schwingungserzeuger 22 steht lediglich an seinem oberen Ende über einen entlang der Längsachse 12 beweglichen zapfen 24, welcher gegen ein Kontaktelement 25 des Schwingungserzeugers 22 entlang der Längsachse 12 federvorgespannt anliegt, mit der Werkzeugmaschine 3 in Kontakt. Via des Zapfens 24 und des Kontaktelements 25 wird elektrische Energie von der Werkzeugmaschine 3 auf den Schwingungserzeuger 22 übertragen, welcher die elektrische Energie in Ultraschallwellen wandelt und letztere mittels des Kopplungselements 21 auf die Sonotrode 4 überträgt. Die sich somit ergebende Schwingung der Klinge 5 entlang der Längsachse 12 vereinfacht ein Schneiden von beispielsweise Kunststoff mit dieser.

Der Schwingungserzeuger 22 und das Kopplungselement 21 erstrecken sich nach oben in die Werkzeugmaschine 3 hinein. Insbesondere können sich diese durch eine Hohlspindel 26 der Werkzeugmaschine 3 erstrecken, welche einen Elektromotor 27 der Werkzeugmaschine 3 mit einem Rotor 37 der Magnetisierungseinrichtung 20 drehfest verbindet. Vorzugsweise setzt sich die Hohlspindel 26 aus fest miteinander verbundenen Abschnitten 28, 29 zusammen.

Die Abschnitte 28, 29 der Hohlspindel 26 können beispielsweise mittels Kugellager 30 gegenüber Gehäuseteilen 34 und 35 der Werkzeugmaschine 3 gelagert sein. Der Abschnitt 28 ist vorzugsweise mit einem Rotor 41 des Elektromotors 27 fest verbunden, beispielsweise mittels Bolzen 42. Der Abschnitt 29 kann an seinem dem Abschnitt 28 gegenüberliegenden, unteren Ende 36 mit dem Rotor 37 fest verbunden sein. Der buchsenförmigen Abschnitt 7 der Aufnahme 6 der Ultraschallbearbeitungseinheit 2 kann sich in das untere Ende 36 des Abschnitts 29 hineinerstrecken. Für ein erleichtertes Einführen des buchsenförmigen Abschnitts 7 in das untere Ende 36 des Abschnitts 29 ist dieser vorzugsweise mit einer Einführschräge 45 ausgebildet. Außerdem kann der Abschnitt 29 radiale Öffnungen 38 aufweisen, die mit Kanälen 39 in Verbindung stehen, um somit eine Belüftung der Kugellager 30 zu gewährleisten.

Der Rotor 41 des Elektromotors 27 ist von einem Stator 46 desselben umgeben. Der Elektromotor 27 ist dazu eingerichtet, die Ultraschallbearbeitungseinrichtung 2 um ihre Längsachse 12 zu drehen. Bevorzugt ist der Elektromotor 27 als Torquemotor ausgebildet.

Neben dem Rotor 37, welcher ringförmig und beispielsweise aus Stahl ausgebildet ist, weist die Magnetisiereinrichtung 20 eine Spule 43 auf. Die Spule 43 ist fest mit dem Gehäuseteil 35 verbunden und damit ortsfest gegenüber dem Rotor 37 vorgesehen. In dem in der Figur dargestellten, bestromten Zustand der Spule 43 erzeugt diese ein Magnetfeld, welches sowohl den Rotor 37 als auch den Anker 18 der Ultraschallbearbeitungseinrichtung 2 durchdringt. Diese Durchdringung wird noch dadurch verstärkt, dass die Spule 43 teilweise in den Rotor 37 hineinragt. Gemäß dem vorliegenden Ausführungsbeispiel ist daher ein Labyrinthspalts 44 zwischen der Spule 43 und dem Rotor 37 vorgesehen.

Das beschriebene Magnetfeld führt zu einem magnetischen Kraftschluss zwischen dem Rotor 37 und dem Anker 18. Dieser Kraftschluss ist insbesondere geeignet, hohe Drehmomente zwischen dem Elektromotor 27 und der Sonotrode 4 zu übertragen.

Wird die Bestromung der Spule 43 unterbrochen, so ist der Kraftschluss zwischen dem Rotor 37 und dem Anker 18 aufgehoben und die Ultraschallbearbeitungseinrichtung 2 kann gegen eine andere, für die neue Bearbeitungsaufgabe geeignete Ultraschallbearbeitungseinrichtung ausgetauscht werden.

Die Begriffe "unten" und "oben" wurden vorstehend lediglich verwendet, um ein einfacheres Verständnis der Lage der Komponenten relativ zueinander zu gewährleisten. Nicht dagegen soll damit eine Einschränkung auf die absolute Lage der Komponenten gemeint sein; es hätte genauso gut - bei einer Betrachtung der Figur im Querformat - "links" und "rechts" heißen können.

## Patentansprüche

1. Ultraschallbearbeitungseinrichtung (2), mit:
einer Sonotrode (4) zum Bearbeiten von Material; **gekennzeichnet durch** einen Anker (18) zum lösbar magnetischen Verbinden der Ultraschallbearbeitungseinrichtung (2) mit einer Werkzeugmaschine (3) und einer Aufnahme (6), an welcher die Sonotrode und der Anker angebracht sind, wobei die Aufnahme (6) mit einem Durchtritt (11) ausgebildet ist und sich die Sonotrode (4) wenigstens teilweise **durch** diesen hindurcherstreckt.

2. Ultraschallbearbeitungseinrichtung nach Anspruch 1,
**dadurch gekennzeichnet,**
**dass** der Anker (18) als ein Ring aus magnetischem oder magnetisierbarem Material ausgebildet ist.

3. Ultraschallbearbeitungseinrichtung nach Anspruch 1 oder 2,
**dadurch gekennzeichnet,**
**dass** diese ferner einen Schwingungserzeuger (22) aufweist, welcher mit einer Stromversorgung an der Werkzeugmaschine (3) für eine Aufnahme von elektrischer Energie kontaktierbar ist und mit der Sonotrode (4) für ein Einleiten von mechanischen Schwingungen in diese verbunden ist, wobei der Schwingungserzeuger (22) dazu eingerichtet ist, die elektrische Energie in die mechanischen Schwingungen zu wandeln.

4. Ultraschallbearbeitungseinrichtung nach einem der vorhergehenden Ansprüche,
**dadurch gekennzeichnet,**
**dass** die Aufnahme (6) einen sich bezogen auf eine Längsachse (12) der Sonotrode (4) im Wesentlichen radial erstreckenden Flansch (13) aufweist, an welchem der Anker (18) angebracht ist.

5. Ultraschallbearbeitungseinrichtung nach Anspruch 1,
**dadurch gekennzeichnet,**
**dass** der Schwingungserzeuger (22) außerhalb des Durchtritts (11) angeordnet ist.

6. Werkzeugmaschinenanordnung (1), mit einer Werkzeugmaschine (3) und einer Ultraschallbearbeitungseinrichtung (2) nach einem der Ansprüche 1 bis 5, wobei die Werkzeugmaschine (3) und die Ultraschallbearbeitungseinrichtung (2) miteinander lösbar magnetisch verbunden sind.

7. Werkzeugmaschinenanordnung nach Anspruch 6,
**dadurch gekennzeichnet,**
**dass** diese eine feststehende Magnetisiereinrichtung (22) und einen drehbaren Rotor (37) aufweist, wobei der Rotor (37) für ein Kontaktieren des Ankers (18) der Ultraschallbearbeitungseinrichtung (2) vorgesehen ist und die Magnetisiereinrichtung (20) dazu eingerichtet ist, den Rotor (37) und den Anker (18) für ein Verbinden dieser miteinander zu magnetisieren.

8. Werkzeugmaschinenanordnung nach Anspruch 7,
**dadurch gekennzeichnet,**
**dass** die Magnetisiereinrichtung (20) eine Spule (34) aufweist.

9. Werkzeugmaschinenanordnung nach Anspruch 7 oder 8,
**dadurch gekennzeichnet,**
**dass** zwischen der Spule (34) und dem Rotor (37) ein Labyrinthspalt vorgesehen ist.

10. Werkzeugmaschinenanordnung nach einem der Ansprüche 7 bis 9,
**dadurch gekennzeichnet,**
**dass** der Rotor (37) mit einer Spindel (26) zum Drehen der Ultraschallbearbeitungseinrichtung (2) drehfest verbunden ist.

11. Werkzeugmaschinenanordnung nach Anspruch 10,
**dadurch gekennzeichnet,**
**dass** die Spindel (26) mit einer Antriebseinrichtung (27) für ein Antreiben der Spindel (26) verbunden ist.

## Claims

1. An ultrasonic machining means (2), having
a sonotrode (4) for machining material, **characterised by**:
an armature (18) for detachable magnetic connection of the ultrasonic machining means (2) to a machine tool (3) and a receptacle (6), to which the sonotrode and the armature are mounted, the receptacle (6) being provided with a passage (11) and the sonotrode (4) extending at least partially therethrough.

2. An ultrasonic machining means according to claim 1, **characterised in that** the armature (18) takes the form of a ring of magnetic or magnetisable material.

3. An ultrasonic machining means according to claim 1 or claim 2, **characterised in that** it further comprises a vibration generator (22), which is contactable with a power supply on the machine tool (3) for uptake of electrical energy and is connected with the sonotrode (4) for introduction of mechanical vibrations thereinto, the vibration generator (22) being designed to convert the electrical energy into the mechanical vibrations.

4. An ultrasonic machining means according to any one of the preceding claims, **characterised in that** the receptacle (6) comprises a flange (13) extending substantially radially relative to a longitudinal axis (12) of the sonotrode (4), to which flange (13) the armature (18) is mounted.

5. An ultrasonic machining means according to claim 1, **characterised in that** the vibration generator (22) is arranged outside the passage (11).

6. A machine tool arrangement (1), having a machine tool (3) and an ultrasonic machining means (2) according to any one of claims 1 to 5, the machine tool (3) and the ultrasonic machining means (2) being connected detachably together magnetically.

7. A machine tool arrangement according to claim 6, **characterised in that** it comprises a fixed magnetising means (22) and a rotatable rotor (37), the rotor (37) being provided for contacting the armature (18) of the ultrasonic machining means (2) and the magnetising means (20) being designed to magnetise the rotor (37) and the armature (18) to connect them together.

8. A machine tool arrangement according to claim 7, **characterised in that** the magnetising means (20) comprises a coil (34).

9. A machine tool arrangement according to claim 7 or claim 8, **characterised in that** a labyrinth gap is provided between the coil (34) and the rotor (37).

10. A machine tool arrangement according to any one of claims 7 to 9, **characterised in that** the rotor (37) is connected for rotation with a spindle (26) for rotating the ultrasonic machining means (2).

11. A machine tool arrangement according to claim 10, **characterised in that** the spindle (26) is connected with a drive means (27) for driving the spindle (26).

## Revendications

1. Dispositif de traitement ultrasons (2), avec :
une sonotrode (4) destinée au traitement du matériau ;
**caractérisé par** un induit (18) destiné au raccordement magnétique de manière amovible du dispositif de traitement ultrasons (2) avec une machine outils (3) et un logement (6), sur lequel les sonotrodes et l'induit sont apposés, le logement (6) étant formé d'un passage (11) et la sonotrode (4) s'étendant au moins partiellement par ce dernier.

2. Dispositif de traitement ultrasons selon la revendication 1, **caractérisé par le fait que** l'induit (18) a la forme d'une bague constituée d'un matériau magnétique ou pouvant être aimanté.

3. Dispositif de traitement ultrasons selon la revendication 1 ou 2, **caractérisé par le fait que** ce dernier présente en outre un excitateur d'oscillation (22), qui peut être mis en contact avec une alimentation électrique au niveau de la machine outils (3) pour une réception d'énergie électrique et est raccordé avec la sonotrode (4) pour déclencher des oscillations mécaniques dans celle-ci, l'excitateur d'oscillation (22) étant agencé de manière à transformer l'énergie électrique en oscillations mécaniques.

4. Dispositif de traitement ultrasons selon l'une des revendications précédentes, **caractérisé par le fait que** le logement (6) présente une bride (13) s'étendant essentiellement radialement par rapport à un axe longitudinal (12) de la sonotrode (4), sur laquelle bride l'induit (18) est apposé.

5. Dispositif de traitement ultrasons selon la revendication 1, **caractérisé par le fait que** l'excitateur d'oscillation (22) est disposé à l'extérieur du passage (11).

6. Agencement de machine outils (1), avec une machine outils (3) et un dispositif de traitement ultrasons (2), selon l'une des revendications 1 à 5, la machine outils (3) et le dispositif de traitement ultrasons (2) étant mutuellement reliés magnétiquement de manière amovible.

7. Agencement de machine outils selon la revendication 6, **caractérisé par le fait que** celui-ci présente un dispositif d'aimantation (20) fixe et un rotor rotatif (37), le rotor (37) étant prévu pour une mise en contact avec l'induit (18) du dispositif de traitement ultrasons (2) et le dispositif d'aimantation (20) étant agencé pour aimanter le rotor (37) et l'induit (18) pour raccorder ceux-ci mutuellement.

8. Agencement de machine outils selon la revendication 7, **caractérisé par le fait que** le dispositif d'aimantation (20) présente une bobine (34).

9. Agencement de machine outils selon la revendication 7 ou 8, **caractérisé par le fait qu'**une fente en labyrinthe est prévue entre la bobine (34) et le rotor (37).

10. Agencement de machine outils selon une des revendications 7 à 9, **caractérisé par le fait que** le rotor (37) est relié solidaire en rotation avec une broche (26) pour faire tourner le dispositif de traitement ultrasons (2).

11. Agencement de machine outils selon la revendication 10, **caractérisé par le fait que** la broche (26) est reliée avec un dispositif d'entraînement (27) pour un entraînement de la broche (26).
